# EUROPEAN PATENT SPECIFICATION

(11) **EP 3 699 471 B1**
(45) Date of publication and mention of the grant of the patent: **11.09.2024**
(21) Application number: 20157376.3
(22) Date of filing: 14.02.2020
(51) Int. Cl.: G01M 3/04, G01M 3/18, F16L 11/08

(54) **MARINE HOSE FLUID LEAKAGE DETECTION SYSTEM**
FLÜSSIGKEITSLECKDETEKTIONSSYSTEM FÜR MARINESCHLAUCH
SYSTÈME DE DÉTECTION DE FUITE DE FLUIDE DE TUYAU MARIN

(30) Priority: 20.02.2019 JP 2019028352
(43) Date of publication of application: 26.08.2020
(60) Divisional application: 23154402.4
(73) Proprietor: The Yokohama Rubber Co., Ltd., Hiratsuka-shi, Kanagawa 254-8601 (JP)
(72) Inventor: ISHIBASHI, Yusuke, Hiratsuka-shi, Kanagawa 254-8601 (JP)
(74) Representative: Grünecker Patent- und Rechtsanwälte PartG mbB

(56) References cited:
- WO-A1-2016/128250
- DE-A1- 102012 112 450
- US-A1- 2013 263 958

## Description

### Technical Field

The present invention relates to a marine hose fluid leakage detection system and more particularly to a marine hose fluid leakage detection system capable of more reliably detecting leakage of a specific fluid such as refined oil flowing through a marine hose without substantially changing the structure of the marine hose.

### Background Art

Known examples of marine hoses, connecting an offshore tanker with a land facility or the like to transport a fluid such as a crude oil across the sea, have a structure including a fluid retention layer between reinforcing layers layered on an outer circumferential side of a flow channel. Fluid leaking from the flow channel is temporarily stored in the fluid retention layer to prevent leakage to the exterior. To detect an abnormality of fluid leakage as described above, various leakage detection means that are activated by a fluid flowing into the fluid retention layer have been proposed (e.g., refer to Patent Document 1).

In the detection means proposed in Patent Document 1, the fluid flowing into the fluid retention layer increases air pressure of the fluid retention layer. Accordingly, a helical flexible tube disposed in the fluid retention layer undergoes contraction-deformation. This contraction-deformation is sensed by an air pressure sensor connected to the flexible tube via a communication tube. Unfortunately, a structure using a change in air pressure in the fluid retention layer as described above causes the detection of fluid leakage to be difficult when a fluid flowing into the fluid retention layer causes a small change in air pressure. In addition, providing the helical flexibility tube, the communication tube, and the like in the fluid retention layer also has a problem of changing the structure of the marine hose.

For example, it is also conceivable to dispose communication components that allow the fluid retention layer and the exterior of the marine hose to communicate with each other such that when a fluid flows into the fluid retention layer, leakage of the fluid is detected by blocking of the communication due to the fluid between the fluid retention layer and the exterior thereof. However, when a specific fluid such as refined oil exists between these communication components, radio waves are not blocked, and a state where the communication components can communicate with each other is maintained. Thus, special devices are required to detect leakage of the specific fluid as described above.

Patent Document 1: JP 2007-177847 A
WO 2016/128250 A1 describes a slurry operation hose in particular for use in the mining industry. The solid material transferred from a mining site through the hoses gives rise to a high degree of wear of the inner wall. For this reason a RFID moisture sensor is placed in the wall of the hose and in communication with an external device. A detection of moisture above a threshold value causes a warning.

An object of the present invention is to provide a marine hose fluid leakage detection system capable of more reliably detecting the leakage of a specific fluid such as refined oil flowing through a marine hose without substantially changing the structure of the marine hose.

This is achieved by the features of claim 1.

According to the embodiment of the present invention, when a specific fluid, such as refined oil, flowing through the flow channel flows into the fluid retention layer, the IC tag of a passive type installed in the fluid retention layer will be surrounded or soaked with the fluid having flowed thereinto. This dissolves at least a part of the soluble member that is dissolvable by the fluid. Accordingly, radio waves transmitted from the IC tag change in strength in response to the radio waves transmitted from the radio wave transmitter disposed outside the marine hose. Thus, when the strength of the radio waves transmitted from the IC tag received by the radio wave receiver serves as an index, whether a fluid leaks from the flow channel can be more reliably determined. The marine hose may only have an IC tag of a passive type installed in the fluid retention layer, and since the IC tag of a passive type is very small, the structure of the marine hose does not substantially change.

### Brief Description of Drawings

FIG. 1 is an explanatory diagram illustrating a marine hose in which a marine hose fluid leakage detection system according to an embodiment of the present invention is installed.
FIG. 2 is an explanatory diagram illustrating a fluid leakage detection system in a magnified vertical cross-sectional view of a part of a marine hose.
FIG. 3 is a cross-sectional view taken along line A-A of FIG. 2.
FIG. 4 is an explanatory diagram illustrating an IC tag of FIG. 2 in which a soluble member is not dissolved, in an enlarged manner, FIG. 4A is a plan view, and FIG. 4B is a cross-sectional view.
FIG. 5 is an explanatory diagram illustrating a state in which the soluble member of FIG. 4 is partially dissolved, FIG. 5A is a plan view, and FIG. 5B is a cross-sectional view.
FIG. 6 is an explanatory diagram illustrating, in a plan view, a modified example of an IC tag in a state in which a soluble member is not dissolved.
FIG. 7 is an explanatory diagram illustrating, in a plan view, a state in which the soluble member of FIG. 6 is partially dissolved.

### Description of Embodiments

Hereinafter, a marine hose fluid leakage detection system according to embodiments of the present invention (hereinafter referred to as a detection system) will be described based on the embodiments illustrated in the drawings.

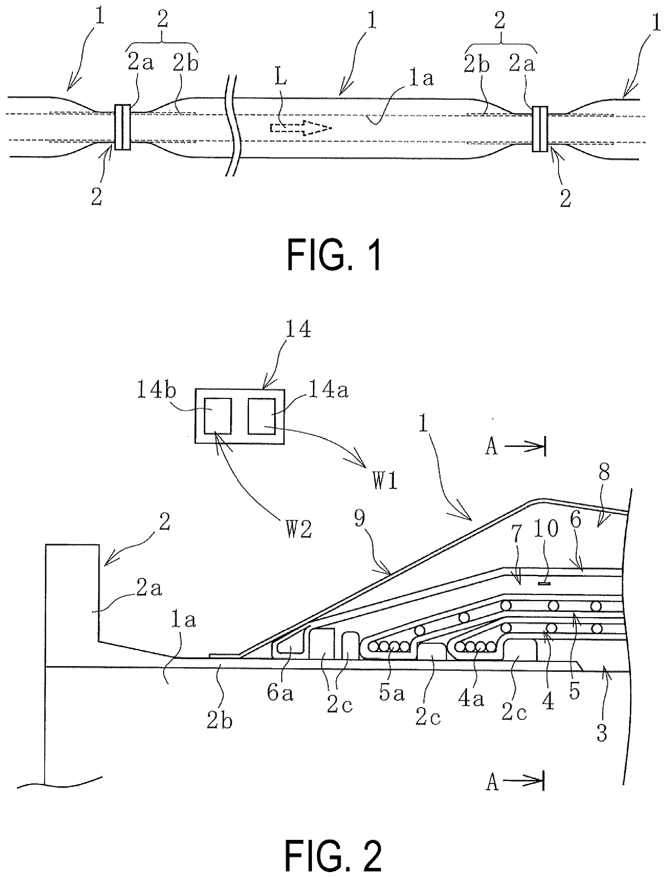

As illustrated in FIG. 1, a marine hose 1 is provided at both ends in its longitudinal direction with connecting end portions 2 for connecting another marine hose 1. The connecting end portions 2 each include a nipple 2b extending in the longitudinal direction of the marine hose 1 and a flange 2a joined to one longitudinal end of the nipple 2b. In general, marine hoses 1 in the order of a range of eight or more and ten or less marine hoses 1 are connected and used.

As illustrated in FIG. 2, between the nipples 2b at both ends of the marine hose 1, on an outer circumferential side of a flow channel 1a, from an inner circumferential side to an outer circumferential side of the marine hose 1, an inner surface rubber layer 3, an inner circumferential reinforcing layer 4, a body wire layer 5, a fluid retention layer 7, an outer circumferential reinforcing layer 6, a buoyant layer 8, and an outer covering layer 9 are sequentially layered. The flow channel 1a of a fluid L is formed on the inner circumferential side of the inner surface rubber layer 3. Examples of the fluid L include refined oil. That is, even when the fluid L exists between an IC tag 10 described below and a detector 14, the fluid L does not block radio waves W1 and W2, and a state in which the IC tag 10 and the detector 14 can communicate with each other is maintained.

The buoyant layer 8 is made of a material exerting buoyancy, such as sponge rubber or polyurethane foam, for causing the marine hose 1to float in sea water. Thus, the marine hose 1 is a so-called floating type. The outer covering layer 9 is made of a water-impermeable material such as rubber or the like and is provided on its surface with a line pattern or the like having excellent visibility.

The inner surface rubber layer 3 is made of a suitable material selected depending on the type of the fluid L. When the fluid L is refined oil, the inner surface rubber layer 3 is made of nitrile rubber or the like having excellent oil resistance. Each of the inner circumferential reinforcing layer 4 and the outer circumferential reinforcing layer 6 is formed by layering a plurality of reinforcing cord layers, in which reinforcing cords are covered with rubber. The body wire layer 5 is formed by spirally winding a metal wire at predetermined intervals around outer circumferential rubber of the inner circumferential reinforcing layer 4. The inner circumferential reinforcing layer 4, the body wire layer 5, and the outer circumferential reinforcing layer 6 are fixed to the nipple 2b with nipple wires 4a, 5a, and 6a provided at one ends of the layers, respectively, and also with a fixing ring 2c or the like provided in a protruding manner on an outer circumferential surface of the nipple 2b. The fluid retention layer 7 interposed between the inner circumferential reinforcing layer 4 and the outer reinforcing layer 6 is a space for storing the fluid L leaked from the flow channel 1a.

This detection system includes an IC tag 10 of a passive type, a radio wave transmitter 14a, and a radio wave receiver 14b. The IC tag 10 is installed in the fluid retention layer 7 at a predetermined longitudinal position in the marine hose 1. The IC tag 10 is disposed in the fluid retention layer 7 in a step of manufacturing the marine hose 1 (molding step) and fixed in the fluid retention layer 7 by vulcanization bonding or the like. The radio wave transmitter 14a and the radio wave receiver 14b are disposed outside the marine hose 1 and separated from the marine hose 1. While in the present embodiment, the detector 14 including the radio wave transmitter 14a and the radio wave receiver 14b integrated is used, but the radio wave transmitter 14a and the radio wave receiver 14b may have an independently separated configuration. When the detector 14 is a portable type, the operation of detecting leakage is further facilitated.

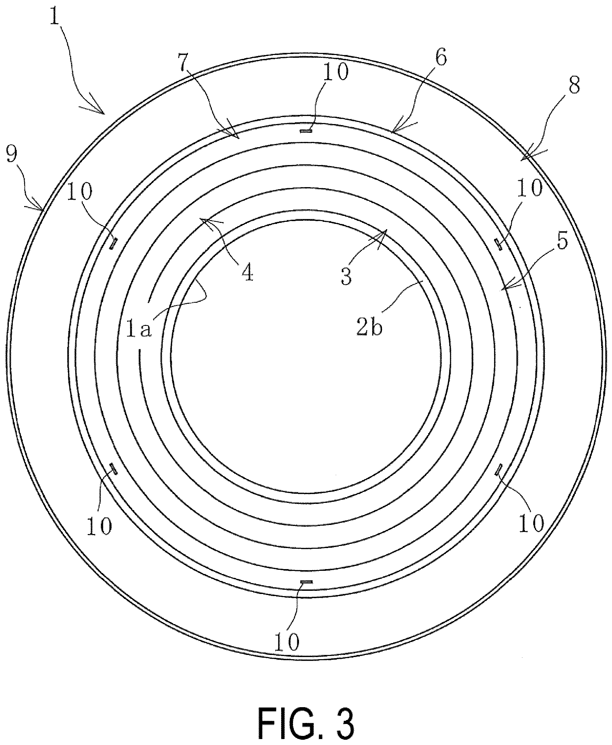

As illustrated in FIG. 3, a plurality of the IC tags 10 are preferably disposed at predetermined longitudinal positions in the marine hose 1 at intervals in the circumferential direction of the marine hose 1. For example, three or more and six or fewer IC tags 10 are disposed at one predetermined longitudinal position in the marine hose 1 at equal intervals in the circumferential direction.

The predetermined longitudinal position in the marine hose 1 at which the IC tag 10 is installed is preferably within a range in which the nipple 2b extends. In this range, presence of the nipple 2b does not allow the IC tag 10 to be substantially affected by bending deformation or torsional deformation of the marine hose 1. This is advantageous in protecting the IC tag 10 from external forces over a long period of time.

The IC tag 10 may be installed only within a range in which the nipple 2b in the longitudinal end portion of the marine hose 1 extends, or besides this range, the IC tag 10 may be installed in a central longitudinal portion or the like of the marine hose 1. That is, the IC tag 10 is preferably disposed at least within the range in which the nipple 2b in the longitudinal end portion of the marine hose 1 extends.

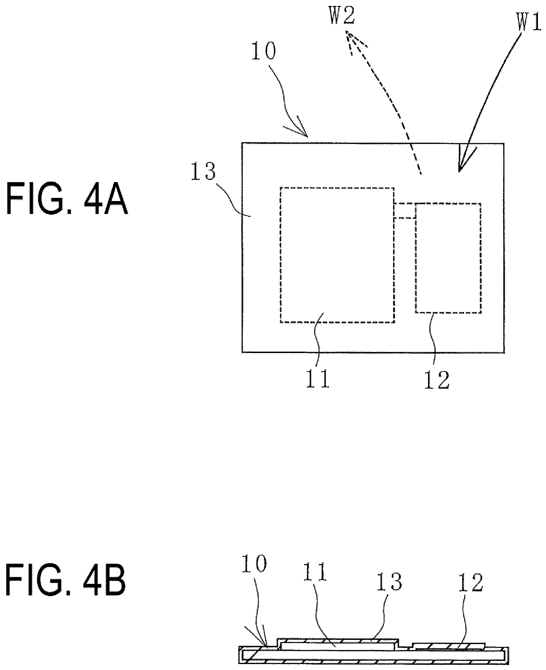

As illustrated in FIG. 4, the IC tag 10 includes an IC chip 11, an antenna portion 12, and a cover layer 13 covering the entire IC chip 11. FIG. 4B illustrates the cover layer 13 with diagonal lines. The IC tag 10 has a very small size, for example, and has a vertical dimension and a horizontal dimension that are each 50 mm or less (corresponding to an outer diameter of 50 mm or less) and a thickness of 10 mm or less. The IC tag 10 more preferably has a vertical dimension and a horizontal dimension that are each 30 mm or less (corresponding to an outer diameter of 30 mm or less) and a thickness of 5 mm or less.

The cover layer 13 is formed of a soluble member that is dissolvable by the fluid L. In the present embodiment, the fluid L is refined oil. Thus, the cover layer 13 is formed of an oil-based coating material that is dissolvable by the refined oil. The cover layer 13 also has characteristics that block passage of the radio waves W1 and W2 described below. The soluble member may be formed by mixing particles and the like, which block the passage of radio waves W 1 and W2, into an oil-based coating material.

When the cover layer 13 is not present on the entire outer surface of the IC tag 10 (when the entire IC chip 11 and antenna portion 12 are not covered), in response to the radio waves W1 transmitted from the radio wave transmitter 14a, the radio waves W2 are transmitted from the IC tag 10. Then the radio waves W2 are received by radio wave receiver 14b. That is, the IC tag 10 and the detector 14 constitute a radio frequency identification (RFID) system.

As illustrated in FIG. 4, the cover layer 13 is present over the entire outer surface of IC tag 10 (when the entire IC chip 11 and antenna portion 12 are covered), passage of the radio waves W1 and W2 is blocked by the cover layer 13. Thus, communication between the IC tag 10 and the detector 14 becomes impossible (communication becomes difficult). In other words, the RFID system is configured such that the radio waves W2 transmitted from the IC tag 10 and received by the radio wave receiver 14b changes in strength according to whether the cover layer 13 formed of the soluble member is dissolved (an area of the cover layer 13 dissolved).

While frequencies and outputs of the radio waves W1 and W2 used in the communication between the IC tag 10 and the detector 14 are appropriately set, it is difficult to set a high output when the IC tag 10 of a passive type is used. Thus, a communication range of the radio waves W1 and W2 between the IC tag 10 and the detector 14 is from a few tens of centimeters to a few meters, for example.

In the present embodiment, the IC chip 11 stores position identification information for identifying an installation position (a longitudinal position, or a longitudinal position and a circumferential position) of the IC tag 10 in the marine hose 1. Then, the position identification information is transmitted to the radio wave receiver 14b by transmitting the radio waves W2. Other information may be stored in the IC chip 11 and transmitted with the radio waves W2. For example, specification information and manufacturing information on the marine hose 1; and information on time for installation of the IC tag 10 on the marine hose 1 can be stored in the IC chip 11 and transmitted.

Even when communication between the IC tag 10 and the detector 14 is possible, the radio waves W1 and W2 are substantially attenuated in water. Thus, when the IC tag 10 is present in water, it is difficult for the IC tag 10 and the detector 14 present in the air to communicate with each other using the radio waves W1 and W2. While the IC tag 10 can be installed in the fluid retention layer 7 to be positioned above the water during use of the marine hose 1, the IC tag 10 may be positioned in water when the marine hose 1 twists. Thus, as illustrated in FIG. 3, the plurality of IC tags 10 are preferably disposed at intervals in the circumferential direction of the marine hose 1 at a predetermined longitudinal position in the marine hose 1 to allow some of the IC tags 10 to be always positioned above the water during use of the marine hose 1.

Hereinafter, an example of a procedure for determining whether the fluid L leaks from the flow channel 1a using the present detection system will be described.

A worker in a working ship approaches the marine hose 1, on which the detector 14 is mounted, routinely or at the time necessary for leakage detection of the fluid L. Then, the detector 14 is activated to transmit the radio waves W1 from the radio wave transmitter 14a toward an appropriate range positioned above the water of the marine hose 1 (the range where the IC tag 10 is embedded). When the fluid L has not flowed into the fluid retention layer 7, the cover layer 13 is not dissolved by the fluid L as illustrated in FIG. 4. Thus, the radio waves W1 are blocked by the cover layer 13. Accordingly, the radio waves W2 are not transmitted from the IC tag 10 in response to the radio waves W1 transmitted from the radio wave transmitter 14a, or the transmitted radio waves W2 become weaker (output decreases). Thus, there are no radio waves W2 received by the radio wave receiver 14b (the radio waves W2 cannot be received), or the received radio waves W2 are weakened.

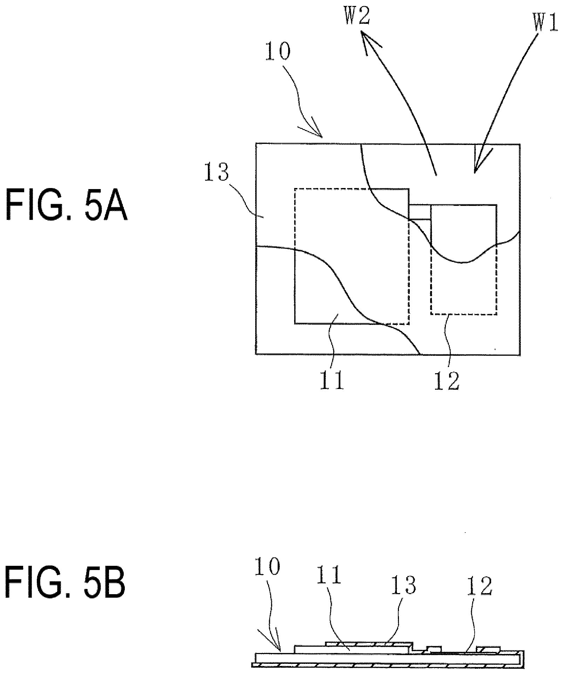

On the other hand, when the inner surface rubber layer 3, the inner circumferential reinforcing layer 4, and the like are damaged and when the fluid L flows from the flow channel 1a into the fluid retention layer 7 to cause the IC tag 10 (cover layer 13) to be surrounded or immersed in the fluid L, at least a part of the cover layer 13 is dissolved by the fluid L as illustrated in FIG. 5. FIG. 5B illustrates the cover layer 13 with diagonal lines.

As the cover layer 13 dissolves, the radio waves W2 are transmitted from the IC tag 10 in response to the radio waves W1 transmitted from the radio wave transmitter 14a, or the transmitted radio waves W2 become stronger (output increases). That is, the IC tag 10 generates electric power using the transmitted radio waves W1. The IC tag 10 transmits the radio waves W2 using the electric power to enable the radio wave receiver 14b to receive the radio waves W2 or to cause the received radio waves W2 to be stronger. In the radio wave receiver 14b, the strength of the received radio waves W2 is displayed numerically, for example.

Thus, in a normal state of the marine hose 1 in which no fluid L leaks from the flow channel 1a, a preliminary determination of the strength of an output value of the radio waves W2 received by the radio wave receiver 14b from the IC tag 10 enables determination of the strength (magnitude of output) of the radio waves W2 transmitted by the IC tag 10 with respect to the normal state. Then, a reference value C corresponding to a normal state of the strength of the radio waves W2 received by the radio wave receiver 14b is set. When the radio waves W2 received by the radio wave receiver 14b have a strength equal to or greater than the reference value C, it is determined that the fluid L has flowed into the fluid retention layer 7. When the strength is less than the reference value C, it is determined that the fluid L has not flowed into the fluid retention layer 7. In other words, when the radio waves W2 received by radio wave receiver 14b have a strength equal to or greater than the reference value C, the fluid L leaks from the flow channel 1a. When strength is less than the reference value C, it can be determined that no fluid L leaks from the flow channel 1a. The reference value C is set to an appropriate value based on results of a pre-test and the like.

The worker can immediately determine whether the fluid L leaks from the flow channel 1a by comparing a numerical value and the like of the strength of the radio waves W2 displayed on the radio wave receiver 14b with the reference value C. The detector 14 also may include an arithmetic unit for comparing the strength of radio waves W2 received by the radio wave receiver 14b with the reference value C. The detection system including such an arithmetic unit enables an automatic determination whether the fluid L leaks from the flow channel 1a.

When no fluid L leaks from the flow channel 1a, it is also assumed that communication between the detector 14 and the respective IC tags 10 using the radio waves W1 and W2 becomes impossible due to damage to the respective IC tags 10 caused by an external force, for example. Thus, when the plurality of the IC tags 10 are installed, preferably, it is determined that the fluid L has flowed into the fluid retention layer 7 when a ratio of the number of IC tags 10, in which the radio waves W2 received by the radio wave receiver 14b have strength equal to or greater than the reference value C, is equal to or greater than a reference rate R, and when the ratio is less than the reference rate R, it is determined that the fluid L has not flowed into the fluid retention layer 7. The determination as described above is advantageous in preventing errors in the determination whether the fluid L leaks from the flow channel 1a. The reference ratio R is set to an appropriate ratio based on results of a pre-test and the like.

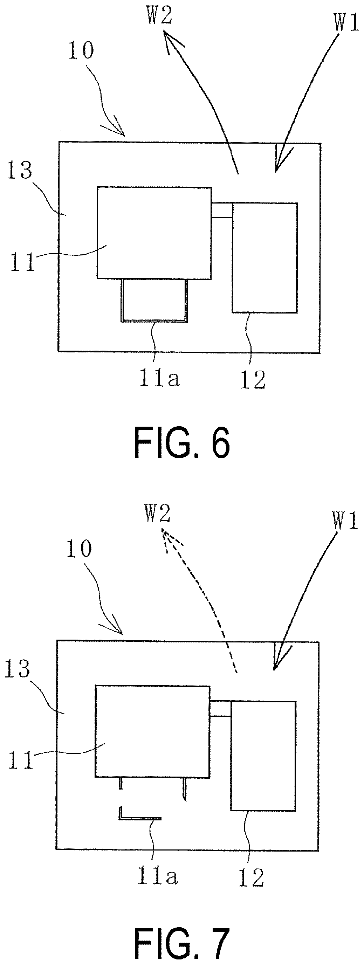

As illustrated in FIG. 6, in an embodiment not covered by the claims, encompassed by the wording of the claims but considered useful for understanding the invention, at least a part of a circuit 11a of the IC chip 11 may be a soluble member. That is, at least some of electrical leads of the circuit 11a are formed of a soluble member that is dissolvable by the fluid L. In the present embodiment, the IC tag 10 does not have the cover layer 13 described above. Besides the circuit 11a of the IC chip 11, at least a part of a circuit (including a detection element and the like) constituting the IC tag 10 may be formed of a soluble member.

When the detector 14 is activated to transmit the radio waves W1 from the radio wave transmitter 14a and the fluid L has not flowed into the fluid retention layer 7, the IC tag 10 functions normally because the circuit 11a is not dissolved by the fluid L as illustrated in FIG. 6. Accordingly, the IC tag 10 generates electric power using the transmitted radio waves W1. The IC tag 10 transmits the radio waves W2 using the electric power, and the radio waves W2 are received by the radio wave receiver 14b. In the radio wave receiver 14b, the strength of the received radio waves W2 is displayed numerically, for example.

On the other hand, when the inner surface rubber layer 3, the inner circumferential reinforcing layer 4, and the like are damaged and when the fluid L flows from the flow channel 1a into the fluid retention layer 7 to cause the IC tag 10 to be surrounded or immersed in the fluid L, at least a part of the circuit 11a is dissolved by the fluid L as illustrated in FIG. 7 to break the IC tag 10 itself. Accordingly, the radio waves W2 are not transmitted from the IC tag 10 in response to the radio waves W1 transmitted from radio wave transmitter 14a. This eliminates the radio waves W2 to be received by the radio wave receiver 14b (the radio waves W2 cannot be received).

Thus, in a normal state of the marine hose 1 in which no fluid L leaks from the flow channel 1a, a preliminary determination of the strength of the output value of the radio waves W2 received by the radio wave receiver 14b from the IC tag 10 enables the determination of the strength (magnitude of output) of the radio waves W2 transmitted by the IC tag 10 with respect to the normal state. Then, the reference value C corresponding to a normal state of strength of the radio waves W2 received by the radio wave receiver 14b is set. When the radio waves W2 received by the radio wave receiver 14b have a strength less than the reference value C, it is determined that the fluid L has flowed into the fluid retention layer 7. When the strength is equal to or more than the reference value C, it is determined that the fluid L has not flowed into the fluid retention layer 7. In other words, when the radio waves W2 received by radio wave receiver 14b have a strength less than the reference value C, the fluid L leaks from the flow channel 1a. When the strength is equal to or greater than the reference value C, it can be determined that no fluid L leaks from the flow channel 1a. The reference value C is set to an appropriate value based on results of a pre-test and the like.

As described above, the detection system according to the embodiment of the present invention enables a more reliable determination whether the fluid L leaks from the flow channel 1a, based on strength of the radio waves W2 transmitted from the IC tag 10 and received by the radio wave receiver 14b. The marine hose 1 may only have the IC tag 10 installed in the fluid retention layer 7, and since the IC tag 10 of a passive type is very small, the structure of marine hose 1 does not substantially change. Thus, performance of the marine hose 1 is not affected, and various kinds of quality certification of the marine hose 1 are not affected.

Even when no fluid L leaks from the flow channel 1a, it is also assumed that communication between the detector 14 and the respective IC tags 10 using the radio waves W1 and W2 becomes impossible due to damage to the respective IC tags 10 caused by an external force, for example. Thus, when the plurality of IC tags 10 are installed, preferably, it is determined that the fluid L has not flowed into the fluid retention layer 7 when a ratio of the number of IC tags 10, in which the radio waves W2 received by the radio wave receiver 14b have strength equal to or more than the reference value C, is equal to or greater than the reference rate R, and when the ratio is less than the reference rate R, it is determined that the fluid L has flowed into the fluid retention layer 7. The determination as described above is advantageous in preventing errors in the determination whether the fluid L leaks from the flow channel 1a. The reference ratio R is set to an appropriate ratio based on results of a pre-test and the like.

In each of the above embodiments, position identification information for identifying an installation position of the IC tag 10 in the marine hose 1 is transmitted with the radio waves W2 transmitted from the IC tag 10. Thus, analyzing the radio waves W2 (position identification information) received by the radio wave receiver 14b facilitates more reliable identification of a position where the fluid L leaks.

Using the IC tags 10 identical in specifications or the IC tags 10 identical in manufacturing lot may have a risk that all of the IC tags 10 do not function normally due to any possible reason. This causes errors in the determination whether the fluid L leaks. Thus, to avoid this risk, the IC tags 10 different in specifications or the IC tags 10 different in manufacturing lots may be mixed and installed in the fluid retention layer 7.

In addition, a known oil pod disposed on the outer circumferential surface of the nipple 2b for detecting the fluid L having flowed into the fluid retention layer 7 can be used in combination with the detection system described above.

### Reference Signs List

1 Marine hose
1a Flow channel
2 Connecting end portion
2a Flange
2b Nipple
2c Fixing ring
3 Inner surface rubber layer
4 Inner circumferential reinforcing layer
4a Nipple wire
5 Body wire layer
5a Nipple wire
6 Outer circumferential reinforcing layer
6a Nipple wire
7 Fluid retention layer
8 Buoyant layer
9 Outer covering layer
10 IC tag
11 IC chip
11a Circuit (soluble member)
12 Antenna portion
13 Cover layer (soluble member)
14 Detector
14a Radio wave transmitter
14b Radio wave receiver

## Claims

1. A marine hose fluid leakage detection system that detects a leakage of a fluid flowing through a marine hose (1),
the marine hose (1) including: an inner circumferential reinforcing layer (4) and an outer circumferential reinforcing layer (6), being layered on an outer circumferential side of a flow channel (1a); a fluid retention layer (7) interposed between the inner circumferential reinforcing layer (4) and the outer circumferential reinforcing layer (6); and a buoyant layer (8) layered on the fluid retention layer (7) on its outer circumferential side,
the marine hose fluid leakage detection system comprising:
the marine hose (1);
an IC tag (10) of a passive type installed in the fluid retention layer (7) at a predetermined position in a longitudinal direction of the marine hose (1); and
a radio wave transmitter (14a) and a radio wave receiver (14b) disposed outside the marine hose (1),
the radio wave receiver (14b) receiving radio waves (W2) transmitted from the IC tag (10) in response to radio waves transmitted from the radio wave transmitter (14a),
a cover layer (13) formed of a soluble member and formed of an oil-based coating material that is dissolvable by the fluid,
the IC tag (10) being configured to cause a change in strength of the radio waves (W2) transmitted from the IC tag (10) to be received by the radio wave receiver (14b) according to whether the soluble member is dissolved, and
whether the fluid leaks being determined based on the strength of the radio waves (W2) transmitted from the IC tag (10) and received by the radio wave receiver (14b);
**characterized in that**
the IC tag (10) includes an IC chip (11), an antenna portion (12) and the cover layer (13) covering the entire IC chip (11); and
the fluid is refined oil or crude oil.

2. The marine hose fluid leakage detection system according to claim 1, wherein the IC tag (10) is installed at least in a range in which a nipple (2b) in a longitudinal end portion of the marine hose (1) extends.

3. The marine hose fluid leakage detection system according to claim 1 or 2, wherein a plurality of the IC tags (10) are disposed at intervals in a circumferential direction of the marine hose (1) at a predetermined longitudinal position in the marine hose (1).

4. The marine hose fluid leakage detection system according to any one of claims 1 to 3, wherein
the IC tag (10) stores position identification information for identifying an installation position of the IC tag (10) itself in the marine hose (1), and
the position identification information is transmitted to the radio wave receiver (14b) with the radio waves (W2) transmitted from the IC tag (10).

5. The marine hose fluid leakage detection system according to any one of claims 1 to 4, wherein IC tags (10) different in specifications or IC tags (10) of different manufacturing lots are mixed and installed as the IC tag (10).

## Patentansprüche

1. Flüssigkeitsleck-Erkennungssystem für Marineschläuche, das ein Leck eines durch einen Marineschlauch (1) fließenden Fluids detektiert,
wobei der Marineschlauch (1) enthält: eine innere Umfangsverstärkungsschicht (4) und eine äußere Umfangsverstärkungsschicht (6), die auf einer äußeren Umfangsseite eines Strömungskanals (1a) geschichtet sind; eine Flüssigkeitsrückhalteschicht (7), die zwischen der inneren Umfangsverstärkungsschicht (5) und der äußeren Umfangsverstärkungsschicht (6) angeordnet ist; und eine schwimmfähige Schicht (8), die auf der Flüssigkeitsrückhalteschicht (7) auf ihrer äußeren Umfangsseite geschichtet ist,
wobei das Flüssigkeitsleck-Erkennungssystem für Marineschläuche umfasst:
den Marineschlauch (1);
einen IC-Tag (10) passivem Typs, das in der Flüssigkeitsrückhalteschicht (7) an einer vorbestimmten Position in einer Längsrichtung des Marineschlauchs (1) installiert ist; und
einen Funkwellensender (14a) und einen Funkwellenempfänger (14b), die außerhalb des Marineschlauchs (1) angeordnet sind,
wobei der Funkwellenempfänger (14b) Funkwellen (W2) empfängt, die von dem IC-Tag (10) als Antwort auf Funkwellen gesendet werden, die von dem Funkwellensender (14a) gesendet werden,
eine Abdeckschicht (13), die aus einem löslichen Element gebildet ist und die aus einem ölbasierten Beschichtungsmaterial gebildet ist, das durch das Fluid lösbar ist,
wobei das IC-Tag (10) eingerichtet ist, eine Änderung der Stärke der Funkwellen (W2), die von dem IC-Tag (10) gesendet werden, um von dem Funkwellenempfänger (14b) empfangen zu werden, zu veranlassen, je nachdem, ob das lösliche Element aufgelöst ist, und
bestimmt wird, ob das Fluid leckt, auf Grundlage der Stärke der Radiowellen (W2), die von dem IC-Tag (10) gesendet und von dem Funkwellenempfänger (14b) empfangen werden;
**dadurch gekennzeichnet, dass**
das IC-Tag (10) einen IC-Chip (11), einen Antennenabschnitt (12) und die Abdeckschicht (13) enthält, die den gesamten IC-Chip (11) abdeckt; und
das Fluid raffiniertes Öl oder Rohöl ist.

2. Flüssigkeitsleck-Erkennungssystem für Marineschläuche nach Anspruch 1, wobei das IC-Tag (10) zumindest in einem Bereich installiert ist, in dem sich ein Nippel (2b) in einem Längsendabschnitt des Marineschlauchs (1) erstreckt.

3. Flüssigkeitsleck-Erkennungssystem für Marineschläuche nach Anspruch 1 oder 2, wobei mehrere IC-Tags (10) in Abständen in einer Umfangsrichtung des Marineschlauchs (1) an einer vorbestimmten Längsposition im Marineschlauch (1) angeordnet sind.

4. Flüssigkeitsleck-Erkennungssystem für Marineschläuche nach einem der Ansprüche 1 bis 3, wobei
das IC-Tag (10) Positionsidentifikationsinformationen zur Identifizierung einer Installationsposition des IC-Tags (10) selbst in dem Marineschlauch (1) speichert, und
die Positionsidentifikationsinformation mit den vom IC-Tag (10) gesendeten Funkwellen (W2) an den Funkwellenempfänger (14b) übertragen wird.

5. Flüssigkeitsleck-Erkennungssystem für Marineschläuche nach einem der Ansprüche 1 bis 4, wobei IC-Tags (10) mit unterschiedlichen Spezifikationen oder IC-Tags (10) aus unterschiedlichen Fertigungslosen gemischt und als das IC-Tag (10) eingebaut sind.

## Revendications

1. Système de détection de fuite de fluide d'un tuyau marin, détectant une fuite d'un fluide qui s'écoule à travers un tuyau marin (1),
le tuyau marin (1) comprenant : une couche de renfort circonférentielle interne (4) et une couche de renfort circonférentielle externe (6), stratifiées sur un côté circonférentiel externe d'un canal d'écoulement (1a); une couche de rétention de fluide (7) interposée entre la couche de renfort circonférentielle interne (4) et la couche de renfort circonférentielle externe (6) ; et une couche flottante (8) stratifiée sur la couche de rétention de fluide (7) sur son côté circonférentiel externe,
le système de détection de fuite de fluide d'un tuyau marin comprenant :
le tuyau marin (1) ;
une étiquette à circuit intégré (10) de type passif installée dans la couche de rétention de fluide (7) à une position prédéterminée en direction longitudinale du tuyau marin (1) ; et
un émetteur d'ondes radio (14a) et un récepteur d'ondes radio (14b) disposés à l'extérieur du tuyau marin (1),
le récepteur d'ondes radio (14b) recevant des ondes radio (W2) transmises par l'étiquette à circuit intégré (10) en réponse aux ondes radio émises par l'émetteur d'ondes radio (14a),
une couche de recouvrement (13) constituée d'un élément soluble et d'un matériau de revêtement à base de pétrole qui est soluble dans le fluide,
l'étiquette à circuit intégré (10) étant configurée pour provoquer un changement d'intensité des ondes radio (W2) transmises par l'étiquette à circuit intégré (10) destinées à être reçues par le récepteur d'ondes radio (14b) selon que l'élément soluble est dissous ou non, et
selon que les fuites de fluide sont ou non déterminées sur la base de l'intensité des ondes radio (W2) transmises par l'étiquette à circuit intégré (10) et reçues par le récepteur d'ondes radio (14b) ;
**caractérisé en ce que**
l'étiquette à circuit intégré (10) comprend une puce électronique (11), une portion d'antenne (12), et la couche de recouvrement (13) recouvrant la totalité de la puce électronique (11) ; et
le fluide est un pétrole raffiné ou un pétrole brut.

2. Système de détection de fuite de fluide d'un tuyau marin selon la revendication 1, dans lequel l'étiquette à circuit intégré (10) est installée au moins dans une plage dans laquelle s'étend un embout (2b) dans une portion d'extrémité longitudinale du tuyau marin (1).

3. Système de détection de fuite de fluide d'un tuyau marin selon la revendication 1 ou 2, dans lequel une pluralité d'étiquettes à circuit intégré (10) sont disposées à intervalles en direction circonférentielle du tuyau marin (1) à une position longitudinale prédéterminée dans le tuyau marin (1).

4. Système de détection de fuite de fluide d'un tuyau marin selon l'une quelconque des revendications 1 à 3, dans lequel
l'étiquette à circuit intégré (10) stocke de l'information d'identification de position pour identifier une position d'installation de l'étiquette à circuit intégré (10) elle-même dans le tuyau marin (1), et
l'information d'identification de position est transmise au récepteur d'ondes radio (14b) via les ondes radio (W2) transmises par l'étiquette à circuit intégré (10) .

5. Système de détection de fuite de fluide d'un tuyau marin selon l'une quelconque des revendications 1 à 4, dans lequel des étiquettes à circuit intégré (10) de différentes spécifications ou des étiquettes à circuit intégré (10) de différents lots de fabrication sont mélangées et installées comme étant lesdites étiquettes à circuit intégré (10).
